# EUROPEAN PATENT APPLICATION

(11) **EP 1 156 614 A1**
(43) Date of publication of application: **21.11.2001**
(21) Application number: 00987790.3
(22) Date of filing: 28.12.2000
(51) Int. Cl.: H04J 13/04, H04B 1/10

(54) **INTERFERING SIGNAL REMOVING DEVICE AND INTERFERING SIGNAL REMOVING METHOD**

(30) Priority: 28.12.1999 JP 37381799
(71) Applicant: MATSUSHITA ELECTRIC INDUSTRIAL CO., LTD., Kadoma-shi, Osaka 571-8501 (JP)
(72) Inventor: MIYOSHI, Kenichi, Yokohama-shi, Kanagawa 232-0066 (JP)
(74) Representative: Grünecker, Kinkeldey, Stockmair & Schwanhäusser Anwaltssozietät
(86) International application number: JP0009391
(87) International publication number: WO0148960

(57) **Abstract**

Block likelihood calculators 106-1 to 106-n calculate likelihood of each symbol included in a received signal, thereafter setting likelihood for rank decision from the calculated likelihood on a predetermined block-by-block basis. A rank decider 109 decides a rank with respect to each symbol included in the predetermined block based on the set block likelihood on the block-by-block basis. A re-spreader 110 spreads the symbol whose rank is the highest on the block-by-block basis, and a subtracter 111 removes the spread symbol from the received signal on the block-by-block basis.

## Description

### Technical Field

The present invention relates to an interference signal canceling apparatus and an interference signal canceling method used in a mobile communication system of CDMA (Code Division Multiple Access).

### Background Art

In the mobile communication system of CDMA, signals of a plurality of users are transmitted in the same band, a signal that is received by an apparatus at a receiving side is subjected to interference caused by the various signals, causing deterioration in the characteristic. As an apparatus for canceling such an interference signal, Unexamined Japanese Patent Publication HEI No. 10-126383 discloses the following apparatus.

Namely, an interference signal canceling apparatus described in Unexamined Japanese Patent Publication HEI No. 10-126383 provides RAKE combining to all symbols existing in a certain interval (e.g., one slot interval) with respect to the users of all mobile stations, and obtains likelihood of each symbol subjected to RAKE combining on a symbol-by-symbol basis. After that, this interference signal canceling apparatus ranks likelihood (processing for ranking each likelihood is hereinafter referred to as "ranking processing") in accordance with the value of the obtained likelihood. Then, the apparatus generates a replica signal in descending order of the symbol having the highest likelihood, and removes an interference signal from the received signal using the replica signal. Hence, the conventional interference signal canceling apparatus performs the calculation of likelihood, the generation of the replica signal, and the removal of the interference signal on a symbol-by-symbol basis.

However, in the conventional interference signal canceling apparatus, since the calculation of likelihood is performed on the symbol-by-symbol basis, the number of operations relating to ranking processing rapidly increases when the symbol rate becomes high (the number of symbols per one slot increases), and this causes a problem in which much time is required to perform ranking processing.

Namely, the symbols to be subjected to ranking processing refer to all symbols of all users. Accordingly, if the total number of users is M and the number of symbols per one user is S, the total number of symbols to be subjected to ranking processing becomes "M x S." The number of operations relating to ranking processing equals the square of the total number of symbols of all users "M x S." Accordingly, when the symbol rate becomes "n times", the number of symbols per one user becomes "n times", with the result that the number of operations relating to ranking processing with respect to all symbols of all users becomes "n x n times."

Hence, according to the conventional interference signal canceling apparatus, the number of operations relating to ranking processing rapidly increases in proportion to the square of the percentage of the increase in the number of symbols as the symbol rate becomes high. The higher the symbol rate becomes, the more time required for ranking processing increases.

### Disclosure of Invention

It is an object of present invention is to provide an interference signal canceling apparatus that is capable of performing interference signal removal processing at high rate regardless of a symbol rate, and an interference signal canceling method.

In order to attain the above object, according to the present invention, calculation of likelihood for ranking processing is performed on a block-by-block basis using a predetermined symbol length as a block length.

### Brief Description of Drawings

FIG. 1 is a block diagram of a substantial part illustrating a schematic configuration of an interference signal canceling apparatus according to one embodiment of the present invention;
FIG. 2 is a block diagram of a substantial part illustrating a schematic configuration of a block likelihood calculator of the interference signal canceling apparatus according to one embodiment of the present invention;
FIG. 3 is a schematic view illustrating the relationship between a symbol and a block, which the interference signal canceling apparatus of one embodiment of the present invention handles; and
FIG. 4 is a block diagram of a substantial part illustrating another schematic configuration of the block likelihood calculator of the interference signal canceling apparatus according to one embodiment of the present invention.

### Best Mode for Carrying Out the Invention

An embodiment of the present invention will be specifically explained with reference to the drawings accompanying herewith.

An interference signal canceling apparatus and an interference signal canceling method of one embodiment of the present invention perform calculation of likelihood for ranking processing on a block-by-block basis using a length of a symbol having the lowest symbol rate of all users as a block length.

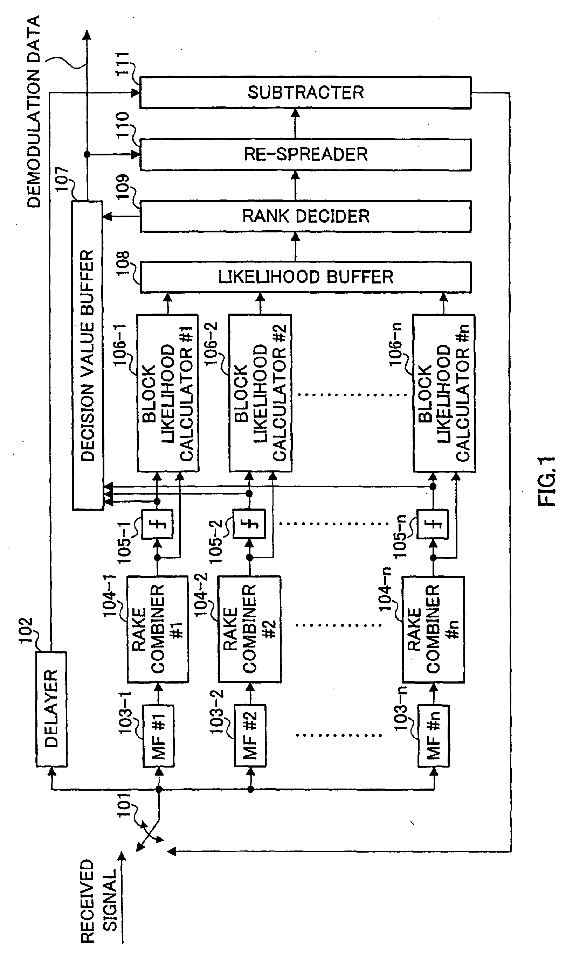

FIG. 1 is a block diagram illustrating a schematic configuration of the interference signal canceling apparatus according to one embodiment of the present invention. In FIG. 1, signals, which serves as received signals, of all users for one slot are sent to a delayer 102 and matching filters 103-1 to 103-n by a switch 101. The received signals are delayed by predetermined time and sent to a subtracter 111.

The matching filters 103-1 to 103-n perform correlation (despread) with respect to the received signals using a spread code assigned to each user to extract signals in which other user's signals and thermal noise and the like are suppressed. The extracted signals of users 1 to n are sent to RAKE combiners 104-1 to 104-n, respectively.

RAKE combiners 104-1 to 104-n RAKE combine the signals of users 1 to n. The RAKE combining improves the quality of received signals. The RAKE-combined signals of users 1 to n corresponding to one slot are sequentially sent to discriminators 105-1 to 105-n and block likelihood calculators 106-1 to 106-n on the symbol-by-symbol basis.

The discriminators 105-1 to 105-n provide hard decision to the signals of users 1 to n on the symbol-by-symbol basis. The signals subjected to hard decision are respectively sent to the block likelihood calculators 106-1 to 106-n and a decision value buffer 107 on the symbol-by-symbol basis.

In the decision value buffer 107, the signals subjected to hard decision sent from the discriminators 105-1 to 105-n are stored. Namely, in the decision value buffer 107, signals of users 1 to n, which correspond to one slot and which are subjected to hard decision, are stored.

In the block likelihood calculators 106-1 to 106-n, the signals subjected to RAKE combining by the RAKE combiners 104-1 to 104-n and the signals subjected to hard decision by the discriminators 105-1 to 105-n are sequentially inputted on the symbol-by-symbol basis. In other words, the signals to which the hard decision has been subjected or not has been subjected are sequentially inputted to the block likelihood calculators 106-1 to 106-n on the symbol-by-symbol basis.

The block likelihood calculators 106-1 to 106-n calculate likelihood of the signals of users 1 to n on the symbol-by-symbol basis. It is noted that likelihood calculated every symbol is subjected to processing to be described later, and the signal, indicating likelihood subjected to processing, is sent to a likelihood buffer 108 on the block-by-block basis using a length of a symbol having the lowest symbol rate of all users as a block length. This likelihood outputted every block is used in ranking processing afterward. In the explanation set forth below, it is assumed that the likelihood calculated every symbol is referred to as "symbol likelihood", and the likelihood for ranking processing outputted every block is referred to as "block likelihood." Additionally, the block likelihood calculators 106-1 to 106-n will be specifically described later.

In the likelihood 108, block likelihood is stored from the block likelihood calculators 106-1 to 106-n. Then, the signal, each indicating the block likelihood, is sent to a rank decider 109.

The rank decider 109 performs rank decision based on the block likelihood, and provides ranking processing to the block likelihood of all users to rank them in descending order of high block likelihood. This result is sent to the decision value buffer 107 and a re-spreader 110.

Herein, in the conventional interference signal canceling apparatus, ranking processing is subjected to the symbol likelihood calculated every symbol of all users. Accordingly, the number of operations relating to ranking processing rapidly increases when the symbol rate becomes high (the number of symbols per one slot increases) as mentioned above.

Hence, in the interference signal canceling apparatus of this embodiment, ranking processing is performed using the block likelihood instead of the symbol likelihood. Namely, in the interference signal canceling apparatus of this embodiment, ranking processing is performed on the block-by-block basis using the length of the symbol having the lowest symbol rate of all users as a block length. This maintains the number of operations relating to ranking processing "square of the number of blocks" constantly even if the symbol rate increases. This reduces the number of operations as compared with the number of operations relating to ranking processing about the symbol likelihood.

When the rank is thus decided by the rank decider 109, the hard decision value of the symbol included in the block whose rank is the highest of all signals stored in the decision value buffer 107 is outputted from the decision value buffer 107 every block as demodulation data and is sent to the re-spreader 110.

The re-spreader 110 re-spreads each hard decision value of the symbol, which is sent from the decision value buffer 107 every block and which is included in the block whose block likelihood is the highest, using the same spread code as used in the despreading time. Accordingly, a replica signal is generated on the block-by-block basis. The replica signal generated on the block-by-block basis is sent to the subtracter 111.

The subtracter 111 subtracts the replica signal from the received signal delayed by the delayer 102 on the block-by-block basis. The signal from which the replica signal is thus subtracted becomes a signal from which the symbol having the highest block likelihood and an influence (interference) due to this symbol are completely removed if the hard decision result of each of the discriminators 105-1 to 105-n is correct.

The received signal from which the replica signal is subtracted by the subtracter 111, that is, the signal subjected to the removal of interference is sent to the delayer 102 and the matching filters 103-1 to 103-n by the switch 101 again.

After that, with respect to only the symbol that is subject to the interference by the symbol having the highest likelihood, the aforementioned despread, RAKE combining, hard decision and likelihood calculation are performed. As a result, in connection with the signal from which the symbol having the highest block likelihood and an influence due to this symbol are completely removed, the signals of all users subjected to the hard decision are stored in the decision value buffer 107. In connection with the signal from which the symbol having the highest block likelihood and an influence due to this symbol are completely removed, the block likelihood of all users is stored in the likelihood buffer 108.

Moreover, the rank decider 109 updates the ranking based on the block likelihood again. At this time, the ranking is updated excepting the symbol decided as the highest block likelihood at the previous ranking. After updating the ranking, the symbol having the highest block likelihood is outputted as demodulation data and is re-spread by the re-spreader 110. After that, the resultant is subtracted from the signal sent from the delayer 102 as mentioned above. At this point, the subtracter 111 outputs the signal in which interference caused by the symbols, each having the first and second block likelihood, is removed from the original received signal.

Afterward, the same processing as mentioned above is carried out until all symbols of all users are demodulated. As a result, demodulation data from which interference between the signals is removed can be obtained.

An explanation will be next give of the block likelihood calculators 106-1 to 106-n.

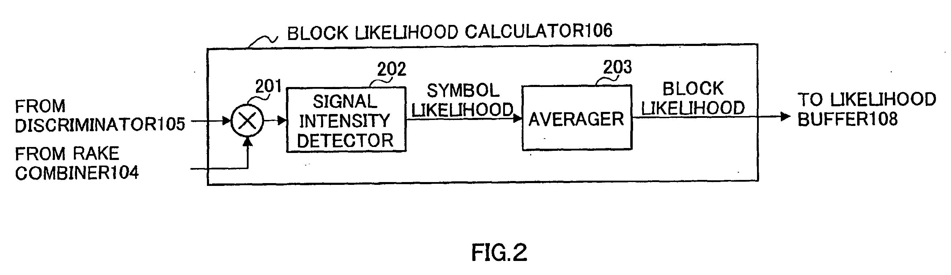

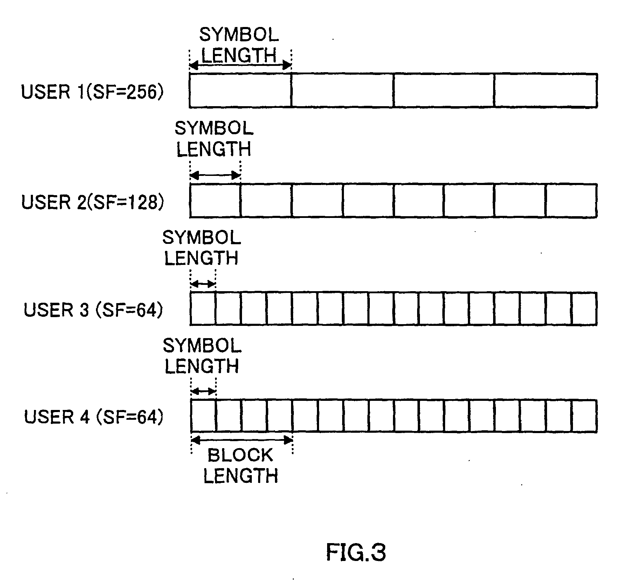

FIG. 2 is a block diagram of a substantial part illustrating a schematic configuration of a block likelihood calculator of the interference signal canceling apparatus according to one embodiment of the present invention. Moreover, FIG. 3 is a schematic view illustrating the relationship between a symbol and a block, which the interference signal canceling apparatus of one embodiment of the present invention handles. It is noted that the RAKE combiner 104, discriminator 105, and block likelihood calculator 106 of FIG. 2 correspond to that the RAKE combiner 104-1 to 104-n, discriminator 105-1 to 105-n, and block likelihood calculator 106-1 to 106-n of FIG. 1, respectively.

In FIG. 2, the signal that has not been subjected to hard decision and the signal that has been already subjected to hard decision are sequentially inputted to a multiplier 201 on the symbol-by-symbol and multiplied. Then, a signal intensity detector 202 detects intensity of the multiplied signal. Since intensity of the multiplied signal is used as likelihood of the symbol, symbol likelihood is sequentially outputted from the signal intensity detector 202 on the symbol-by-symbol basis.

An averager 203 averages symbol likelihood on the block-by-block basis using a length of a symbol having the lowest symbol rate of all users as a block length to obtain block likelihood. More specifically, the block likelihood is calculated in the following way.

For example, as illustrated in FIG.3, it is assumed that data of user 1 is data of 256-fold spread (SF=256) and that data of user 2 is data of 128-fold spread (SF=128). Moreover, it is assumed that data of users 3 and 4 is data of 64-fold spread (SF=64). It is data of user 1 that has the lowest symbol rate. In this case, the averager 203 averages symbol likelihood on the block-by-block basis using a symbol length of user 1 as a block length. Accordingly, regarding user 3 and user 4, symbol likelihood corresponding to four symbols is averaged to calculate block likelihood. Regarding user 2, symbol likelihood corresponding to two symbols is averaged to calculate block likelihood. Moreover, regarding user 1, symbol likelihood corresponding one symbol is directly used as block likelihood.

After that, the rank decider 109 provides ranking processing to the above-calculated block likelihood, and ranks them in descending order of high block likelihood.

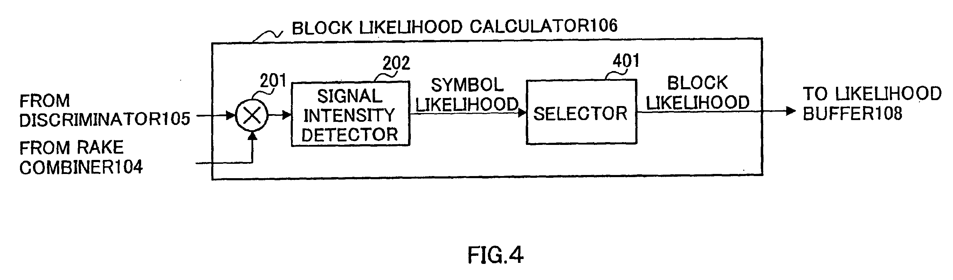

Regarding the configuration of the block likelihood calculator 106, the configuration illustrated in FIG. 4 may be used in place of the configuration of FIG. 2. FIG. 4 is a block diagram illustrating another schematic configuration of the block likelihood calculator of the interference signal canceling apparatus according to one embodiment of the present invention. Additionally, it is noted that the same reference numerals as those of FIG. 2 are added to the same configuration components as those of FIG. 2, and the specific explanation is omitted.

For example, there is a case in which among four symbols of user 4, the symbol likelihood of one symbol is lower than the high symbol likelihood of other three symbols as in FIG. 3. In this case, the use of the block likelihood calculator of FIG. 2 averages the symbol likelihood corresponding to four symbols to obtain block likelihood, so that the block likelihood is calculated as a high value. As a result, this block likelihood is placed in the top rank. Thus, if raking processing is thus carried out in accordance with the block likelihood including only one symbol having the low symbol likelihood, the symbol whose symbol likelihood is low is placed in the top rank, causing possibility that an erroneous replica signal is generated.

Hence, in connection with each of users 1 to 4, a selector 401 of the block likelihood calculator 106 illustrated in FIG. 4 selects specific one symbol likelihood from the block and uses it as block likelihood.

In other words, the selector 401 typically selects the lowest symbol likelihood in the block as block likelihood. Thus, the selection of the lowest symbol likelihood in the block as block likelihood increases the symbol likelihood in the block likelihood placed in the top rank without fail. Accordingly, the interference signal canceling apparatus can generate a replica signal without fail based on the symbol having high likelihood. This makes it possible to prevent an erroneous replica signal from being generated. Thus, the typical selection of the lowest symbol likelihood in the block as block likelihood is particularly effective in the case where the replica having high likelihood is desirably generated even at the occurrence of such high-rate fading that increases variations in the symbol likelihood in the block.

In this way, according to the interference signal canceling apparatus and the interference canceling method of this embodiment, the calculation of the likelihood for ranking processing is carried out on the block-by-block basis using the length of the symbol having the lowest symbol rate of all users as a block length. This makes it possible to reduce the number of operations relating to ranking processing. Accordingly, this makes it possible to reduce time required for ranking processing.

Additionally, the above embodiment has explained the configuration in which interference signal removal processing is performed after storing data corresponding to one slot. However, in the above embodiment, there is no limitation in the length of storing data. For example, 1/2 slot is used as processing unit, and data of the interval may be subjected to interference signal removal processing.

As explained above, according to the present invention, it is possible to perform interference signal removal processing at high rate regardless of the symbol rate.

This application is based on the Japanese Patent Application No. HEI 11-373817 filed on December 28, 1999, entire content of which is expressly incorporated by reference herein

### Industrial Applicability

The present invention can be applied to a mobile station apparatus and a base station apparatus used in a mobile communication system. In the case where the present invention is applied thereto, it is possible to increase an interference signal removal processing rate.

## Claims

1. An interference signal canceling apparatus comprising:
a calculator for calculating likelihood of each symbol included in a received signal;
a setter for setting likelihood for rank decision from the calculated likelihood on a predetermined block-by-block basis;
a decider for deciding a rank with respect to each block based on the set likelihood;
a spreader for spreading a symbol having the highest rank on the block-by-block basis; and
a remover for removing the spread symbol from the received signal on the block-by-block basis.

2. The interference signal canceling apparatus according to claim 1, wherein
said setter sets an average value of likelihood of symbols included in the predetermined block as likelihood for rank decision, and
said decider decides the rank with respect to each block based on the likelihood averaged on the block-by-block basis.

3. The interference signal canceling apparatus according to claim 1, wherein
said setter sets any one of likelihood of symbols included in the predetermined block as likelihood for rank decision, and
said decider decides the rank with respect to each block based on any one of the likelihood.

4. The interference signal canceling apparatus according to claim 1, wherein
when signals having a plurality of symbol rates are multiplexed into the received signal,
said setter sets likelihood for rank decision on the block-by-block basis using a length of a symbol having the lowest symbol rate of the plurality of symbol rates as a block length.

5. A mobile station apparatus having an interference signal canceling apparatus, said interference signal canceling apparatus comprising:
a calculator for calculating likelihood of each symbol included in a received signal;
a setter for setting likelihood for rank decision from the calculated likelihood on a predetermined block-by-block basis;
a decider for deciding a rank with respect to each block based on the set likelihood;
a spreader for spreading a symbol having the highest rank on the block-by-block basis; and
a remover for removing the spread symbol from the received signal on the block-by-block basis.

6. A base station apparatus having an interference signal canceling apparatus, said interference signal canceling apparatus comprising:
a calculator for calculating likelihood of each symbol included in a received signal;
a setter for setting likelihood for rank decision from the calculated likelihood on a predetermined block-by-block basis;
a decider for deciding a rank with respect to each block based on the set likelihood;
a spreader for spreading a symbol having the highest rank on the block-by-block basis; and
a remover for removing the spread symbol from the received signal on the block-by-block basis.

7. An interference signal canceling method comprising the steps of:
calculating likelihood of each symbol included in a received signal;
setting likelihood for rank decision from the calculated likelihood on a predetermined block-by-block basis;
deciding a rank with respect to each block based on the set likelihood;
spreading a symbol having the highest rank on the block-by-block basis; and
removing the spread symbol from the received signal on the block-by-block basis.
